# EUROPEAN PATENT SPECIFICATION

(11) **EP 2 932 292 B1**
(45) Date of publication and mention of the grant of the patent: **11.10.2017**
(21) Application number: 14703464.9
(22) Date of filing: 13.01.2014
(51) Int. Cl.: G01S 5/00, H04W 4/22, H04W 76/00, H04W 88/06, H04W 64/00

(54) **LOCATING USER IN DISTRESS THROUGH MULTIPLE TRANSMITTERS**
LOKALISIERUNG VON BENUTZERN UNTER STRESS ÜBER MEHRERE SENDER
LOCALISATION D'UN UTILISATEUR EN DÉTRESSE PAR L'INTERMÉDIAIRE DE MULTIPLES TRANSMETTEURS

(30) Priority: 14.01.2013 US 201313741283
(43) Date of publication of application: 21.10.2015
(73) Proprietor: Microsoft Technology Licensing, LLC, Redmond, WA 98052 (US)
(72) Inventor: HASSAN, Amer, Redmond, Washington 98052-6399 (US); KUEHNEL, Thomas, Redmond, Washington 98052-6399 (US)
(74) Representative: Driver, Virginia Rozanne
(86) International application number: PCT/US2014/011190
(87) International publication number: WO 2014/110473

(56) References cited:
- US-A1- 2008 299 939
- US-A1- 2011 063 105
- US-A1- 2012 115 430
- US-B1- 7 492 251

## Description

### BACKGROUND

Emergency services are closely tied to location information of people in need of such services. Providing location information for PSTN subscribers was relatively easy since connections are static. In cellular networks, this is typically accomplished by a combination of Mobile Station Assisted (MS-A) and Mobile Station Based (MS-B) technologies that involve global positioning service (GPS) and timing triangulation methods. When it comes to communications over wireless networks such as WLANs or WANs, however, there are challenges in determining and providing location of users. For example, an IP address that is used by the device may help an emergency response center to validate the location in a coarse manner (e.g., city level) by querying the service provider who this IP address is assigned to. However, tunneling protocols used by virtual private networks (VPNs) or other communication protocols may mask the real location.

Location determination may be further complicated if the user is associated with a mobile device (for example, using voice over IP technology through a portable computing device), which may connect to multiple access points or base stations, especially in multi-floor buildings and similar configurations. With a growing number of users are giving up their public switched telephone network (PSTN) connections in favor of voice over IP (VOIP) communication, which may utilize wireless networks including home and enterprise networks, determining user location accurately in emergency situations is a challenge not easily met. Any occurrence of the term "embodiment" in the description has to be considered as an "aspect of the invention", the invention being defined in the appended independent claims. Patent application US2011063105, discloses a PDA transmitting multiple emergency messages on different wireless interfaces.

### SUMMARY

This summary is provided to introduce a selection of concepts in a simplified form that are further described below in the Detailed Description. This summary is not intended to exclusively identify key features or essential features of the claimed subject matter, nor is it intended as an aid in determining the scope of the claimed subject matter.

Embodiments are directed to providing localized location information associated with users for emergency service purposes. A user device with wireless communication capabilities employing one or more technologies may initiate an emergency communication in one or more modalities upon triggering by the user or by an external trigger signal and activate beacon modes for one or more of the available wireless technologies transmitting periodic signals, one or more attributes of which such as period, modulation rate, frequency may be optimized. The beacon signal may also include an identifier associated with the user enabling emergency personnel to locate the user employing line-triangulation.

These and other features and advantages will be apparent from a reading of the following detailed description and a review of the associated drawings. It is to be understood that both the foregoing general description and the following detailed description are explanatory and do not restrict aspects as claimed.

### BRIEF DESCRIPTION OF DRAWINGS

FIG. 1 illustrates an example communication environment, where coarse user location may be provided to an emergency service provider through the user's wireless communication device;
FIG. 2 illustrates an example wireless device with multiple wireless communication modules;
FIG. 3 illustrates conceptually determination of a user's location through line-triangulation employing beacon signals over one or more wireless technologies;
FIG. 4 is a networked environment, where a system according to embodiments may be implemented;
FIG. 5 is a block diagram of an example computing operating environment, where embodiments may be implemented; and
FIG. 6 illustrates a logic flow diagram for a process of determining a user's location through line-triangulation employing beacon signals over one or more wireless technologies, according to embodiments.

### DETAILED DESCRIPTION

As briefly described above, a user device with wireless communication capabilities employing multiple wireless technologies may initiate an emergency communication in one or more modalities and activate beacon modes for the available wireless technologies transmitting periodic signals. Period, modulation rate, frequency, etc. of the beacon signal may be optimized. The beacon signal may also include an identifier associated with the user enabling emergency personnel to locate the user employing line-triangulation.

In the following detailed description, references are made to the accompanying drawings that form a part hereof, and in which are shown by way of illustrations specific embodiments or examples. These aspects may be combined, other aspects may be utilized, and structural changes may be made without departing from the scope of the present disclosure. The following detailed description is therefore not to be taken in the limiting sense, and the scope of the present invention is defined by the appended claims and their equivalents. While the embodiments will be described in the general context of program modules that execute in conjunction with an application program that runs on an operating system on a personal computer, those skilled in the art will recognize that aspects may also be implemented in combination with other program modules.

Generally, program modules include routines, programs, components, data structures, and other types of structures that perform particular tasks or implement particular abstract data types. Moreover, those skilled in the art will appreciate that embodiments may be practiced with other computer system configurations, including hand-held devices, multiprocessor systems, microprocessor-based or programmable consumer electronics, minicomputers, mainframe computers, and comparable hardware. Embodiments may also be practiced in distributed computing environments where tasks are performed by remote processing devices that are linked through a communications network. In a distributed computing environment, program modules may be located in both local and remote memory storage devices.

Embodiments may be implemented as a computer-implemented process (method), a computing system, or as an article of manufacture, such as a computer program product or computer readable media. The computer program product may be a computer storage medium readable by a computer system and encoding a computer program that comprises instructions for causing a computer or computing system to perform example process(es). The computer-readable storage medium is a computer-readable memory device. The computer-readable storage medium can for example be implemented via one or more of a volatile computer memory, a non-volatile memory, a hard drive, a flash drive, a floppy disk, or a compact disk, and comparable hardware media.

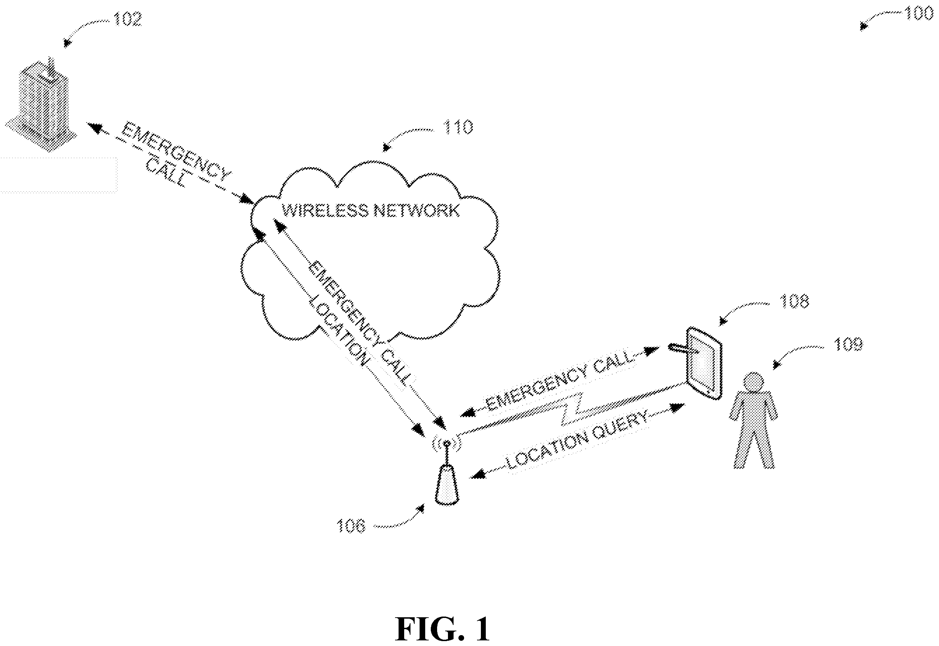

FIG. 1 illustrates an example communication environment, where coarse user location may be provided to an emergency service provider through the user's wireless communication device.

As mentioned above, wireless networks such as WLANs and similar configurations increasingly provide multi-modal communications that replace or complement traditional PSTN or cellular calls. Users such as user 109 shown in diagram 100 may employ stationary or portable computing devices with wireless communication capability such as portable device 108 to communicate with other users on the same wireless network or on other networks (including PSTN and cellular networks). The communications may include, but are not limited to, voice call, video communications, text messaging, email exchange, data sharing, application sharing, whiteboard sharing, and comparable ones.

In a wireless network 110, portable device 108 may communicate with the network infrastructure through an access point 106. A wireless network typically includes multiple access points, and the portable device 108 may be in communication with one or more of them at any given time depending on signal quality, location, and other factors. Thus, even is the access points are stationary and their location is known, the user's location may not be accurately ascertainable when he/she is using the portable device 108 to communicate.

A system according to example embodiments may employ beaconing by one or more transmitter modules on the portable device 108 to enable accurate determination of the location of the user 109 through line-triangulation by emergency personnel. Underlying radio technologies may use standard or proprietary wireless communications such as Wi-Fi, near field communications (NFC), cellular communications, or even other radio technologies such as FM, but are not limited to those.

The emergency communication may be triggered by the user 109 placing a voice call to an emergency service provider (e.g., 911), sending an emergency text message, initiating a video call to an emergency service provider 102, making a pre-established stress gesture during a video communication - which may be automatically detected by the system, and comparable actions. The emergency communication may also be triggered by external signals such as a sensor attached to the communication device (e.g., a gyroscope, an accelerometer, a thermal sensors, a pressure sensor, a radiation sensor, and comparable ones) or a signal from a monitoring entity (e.g., a service monitoring a location of the user through the portable device 108 may initiate the communication once it determines the user being outside a predefined perimeter, etc.).

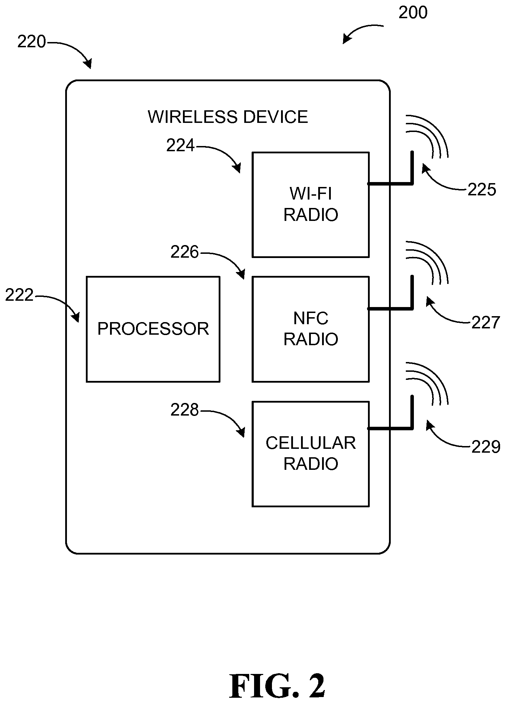

FIG. 2 illustrates an example wireless device with multiple wireless communication modules.

Diagram 200 shows an example wireless device 220 with three example wireless communication modules 224, 226, and 228 with their respective antennas 225, 227, and 229. A processor 222 may manage the wireless communication modules and any communications in addition to other operations associated with the wireless device 220. Wireless device 208 may be a notebook, a tablet, a smartphone, a vehicle mount computer, a specialized communication device, and so on, and enable one or more of the modalities discussed herein.

In the illustrated example configuration, wireless communication module 224 is a Wi-Fi® radio for WLAN type communications, wireless communication module 226 is an NFC radio (e.g., Bluetooth), and wireless communication module 228 is a cellular radio. Of course, other wireless technologies may also be employed in place of or in addition to the illustrated ones.

According to some example embodiments, upon invocation of an emergency communication event, the wireless device 220 may initiate the communication over one or more modalities through a selected or default wireless communication module. The communication may be routed to the proper receiving components such as an access point, a base station, or similar devices. The emergency communication event may be recognized by the software stack in the wireless device 220 and an identifier associated with the user may be generated. The identifier may also be transmitted as part of the emergency communication. Next, the processor 222 may initiate a beacon mode in one or more of the wireless communication modules. In the beacon mode, the activated wireless communication modules may transmit periodically a signal that includes the identifier and their wireless communication capabilities. Emergency personnel arriving in the vicinity may determine the exact location of the user through line-triangulation (user stationary, emergency personnel mobile) honing in on the one or more beacon signals.

An example of the beacon mode is the group owner (GO) mode in Wi-Fi Direct™ technology, which allows devices to find nearby Wi-Fi Direct™ devices and form a Wi-Fi Direct™ group to communicate over a peer-to-peer link without wireless access points in the infrastructure mode. In a Wi-Fi Direct™ group, the group owner may work as an access point in the Wi-Fi infrastructure mode and the other devices may join the group as clients. A group may be created either by negotiation between two devices or in an autonomous mode by a single GO device. In a negotiation-based group creation, the devices may compete based on the GO intent value and the higher intent device may become a group owner, while the other device becomes a group client. In an autonomous group creation, a device may become a group owner by itself without any group client.

The GO mode is one example of a beacon mode. Embodiments may be implemented using similar periodic transmission modes in other wireless technologies. Similarly, embodiments are not limited to the example wireless communication technologies. Other technologies employing different modulations, communication protocols, frequency spectra, and so on, may also be employed using the principles described herein.

In other example embodiments, the beaconing wireless module(s) may adjust their modulation rate, power level, frequency, etc. to enhance a range of detection and/or mitigate signal degradation, for example, due to multipath effect.

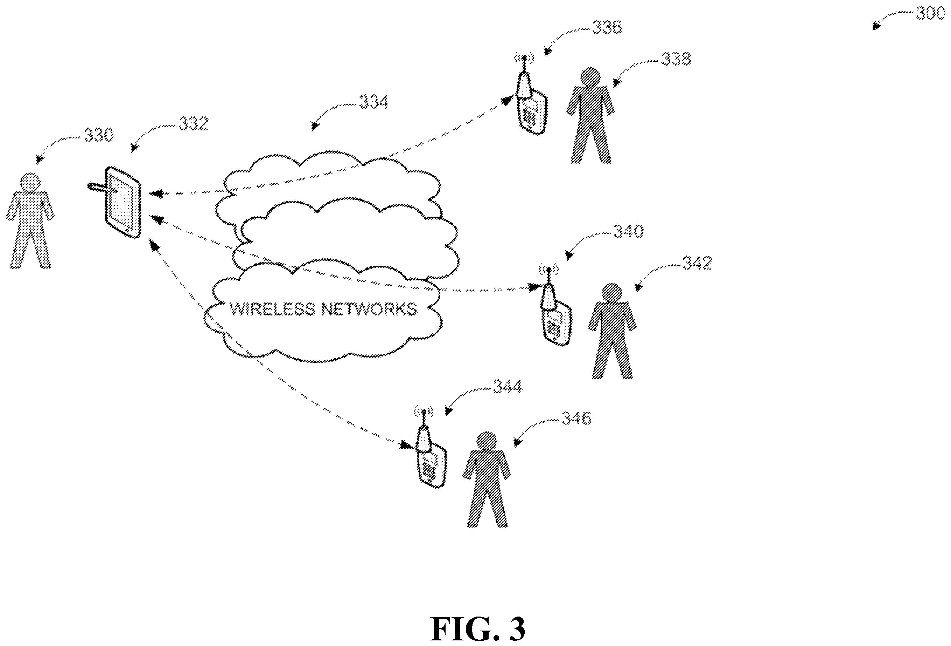

FIG. 3 illustrates conceptually determination of a user's location through line-triangulation employing beacon signals over one or more wireless technologies.

Diagram 300 shows three emergency personnel 338, 342, and 346 with their respective receiving devices 336, 340, and 344 in a vicinity of user 330 in distress. User 330 may have initiated an emergency communication through his/her portable device 332 triggering the search by the emergency personnel for the user's exact location. Portable device 332 may include multiple wireless modules employing different technologies, for example, a Wi-Fi transceiver, a cellular transceiver, an NFC transceiver, and so on. Each of the wireless modules may communicate with receiving components over different wireless networks 334.

In some example embodiments, upon initiating the emergency communication over one wireless technology, the portable device 332 may generate an identifier associated with the user and activate the beacon mode in at least one of the wireless modules. The beacon signal may be transmitted including the identifier and information associated with the wireless capabilities of each respective module. The period of the beacon transmission may be optimized to conserve power for the portable device 332 and a modulation rate may be lowered to enhance a range of detection. In other embodiments, a frequency of the beacon signal may also be changed to enhance detection by the emergency personnel's receiving devices.

For example, the beacon signal may include data frames sent with direct sequence spread spectrum 'DSSS' (at a low rate) and the position of the user may be estimated with the beacon signal and phase estimation of the DSSS. In some cases, two or more wireless modules may be configured to transmit the beacon signals further enhancing the chances of detection (and triangulation) by the emergency personnel. This may be especially helpful in environments where reflection and other environmental effects (e.g., in buildings) may interfere with or otherwise degrade the beacon signal(s).

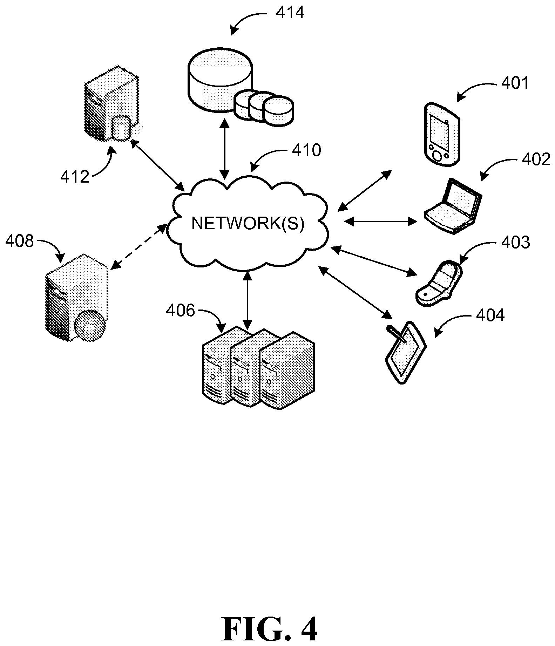

FIG. 4 is an example networked environment, where embodiments may be implemented. In addition to locally installed applications, such as communication application 522 discussed below, a communication service may also be employed in conjunction with hosted applications and services that may be implemented via software executed over one or more servers 406 or individual server 408. A hosted communication service or application may be a web-based service or application, a cloud based service or application, and similar ones, and communicate with client applications on individual computing devices such as a handheld computer 401, a laptop computer 402, a smart phone 403, or a tablet computer 404 ('client devices') through network(s) 410 and control a user interface presented to users. Such a service may enable users to interact with other users employing a variety of modalities and initiate emergency communications (in any one of the modalities) with location determination based on beaconing as discussed herein.

Client devices 401-404 are used to access the functionality provided by the hosted service or application. One or more of the servers 406 or server 408 may be used to provide location determination service as discussed above. Relevant data may be stored in one or more data stores (e.g. data store 414), which may be managed by any one of the servers 404 or by database server 412.

Network(s) 410 may comprise any topology of servers, clients, Internet service providers, and communication media. A system according to embodiments may have a static or dynamic topology. Network(s) 410 may include a secure network such as an enterprise network, an unsecure network such as a wireless open network, or the Internet. Network(s) 410 may also coordinate communication over other networks such as PSTN or cellular networks. Network(s) 410 provides communication between the nodes described herein. By way of example, and not limitation, network(s) 410 may include wireless media such as acoustic, RF, infrared and other wireless media.

Many other configurations of computing devices, applications, data sources, and data distribution systems may be employed to provide location determination for emergency services in wireless networks using beacon signals of one or more wireless modules. Furthermore, the networked environments discussed in FIG. 4 are for illustration purposes only. Embodiments are not limited to the example applications, modules, or processes.

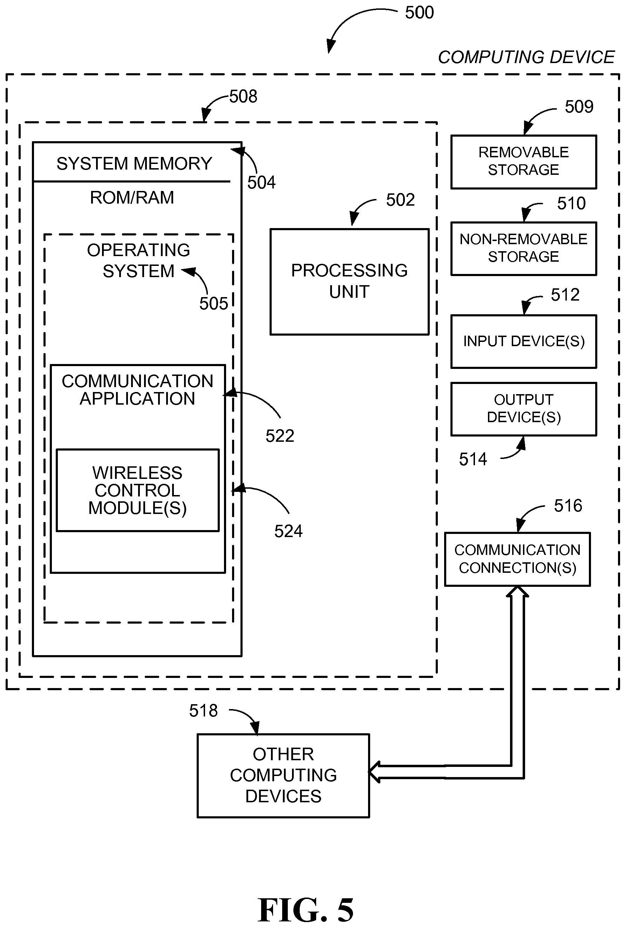

FIG. 5 and the associated discussion are intended to provide a brief, general description of a suitable computing environment in which embodiments may be implemented. With reference to FIG. 5, a block diagram of an example computing operating environment for an application according to embodiments is illustrated, such as computing device 500. In a basic configuration, computing device 500 may be any portable computing device with wireless communication capabilities, which may include touch and/or gesture detection capability in some examples, and include at least one processing unit 502 and system memory 504. Computing device 500 may also include a plurality of processing units that cooperate in executing programs. Depending on the exact configuration and type of computing device, the system memory 504 may be volatile (such as RAM), non-volatile (such as ROM, flash memory, etc.) or some combination of the two. System memory 504 typically includes an operating system 505 suitable for controlling the operation of the platform, such as the WINDOWS ®, WINDOWS MOBILE®, or WINDOWS PHONE® operating systems from MICROSOFT CORPORATION of Redmond, Washington. The system memory 504 may also include one or more software applications such as communication application 522 and wireless control modules 524.

Communication application 522 may enable communication with other devices over a wireless network through one or more modalities and also emergency communications with an emergency service provider. Wireless control modules 524 may facilitate emergency communications with an emergency service provider and transmit periodic beacon signals for emergency personnel to determine location of the computing device 500 through triangulation. This basic configuration is illustrated in FIG. 5 by those components within dashed line 508.

Computing device 500 may have additional features or functionality. For example, the computing device 500 may also include additional data storage devices (removable and/or non-removable) such as, for example, magnetic disks, optical disks, or tape. Such additional storage is illustrated in FIG. 5 by removable storage 509 and non-removable storage 510. Computer readable storage media may include volatile and nonvolatile, removable and non-removable media implemented in any method or technology for storage of information, such as computer readable instructions, data structures, program modules, or other data. System memory 504, removable storage 509 and non-removable storage 510 are all examples of computer readable storage media. Computer readable storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device 500. Any such computer readable storage media may be part of computing device 500. Computing device 500 may also have input device(s) 512 such as keyboard, mouse, pen, voice input device, touch input device, an optical capture device for detecting gestures, and comparable input devices. Output device(s) 514 such as a display, speakers, printer, and other types of output devices may also be included. These devices are well known in the art and need not be discussed at length here.

Computing device 500 may also contain communication connections 516 that allow the device to communicate with other devices 518, such as over a wireless network in a distributed computing environment, a satellite link, a cellular link, and comparable mechanisms. Other devices 518 may include computer device(s) that execute communication applications and comparable devices. Communication connection(s) 516 is one example of communication media. Communication media can include therein computer readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media.

Example embodiments also include methods. These methods can be implemented in any number of ways, including the structures described in this document. One such way is by machine operations, of devices of the type described in this document.

Another optional way is for one or more of the individual operations of the methods to be performed in conjunction with one or more human operators performing some. These human operators need not be collocated with each other, but each can be only with a machine that performs a portion of the program.

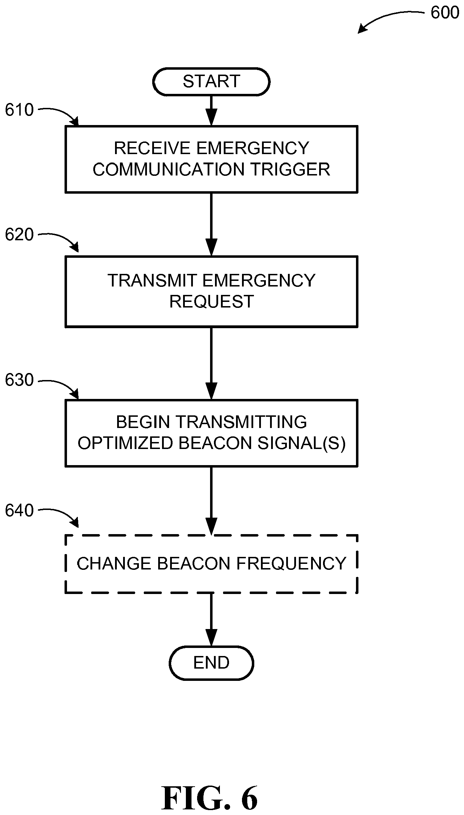

FIG. 6 illustrates a logic flow diagram for a process of determining a user's location through line-triangulation employing beacon signals over one or more wireless technologies, according to embodiments. Process 600 may be implemented as part of a communication application or an emergency service.

Process 600 begins with operation 610, where an emergency communication trigger is received. The emergency communication trigger may be the user initiating an emergency communication or an external signal (such as one from a sensor) initiating the emergency communication automatically. Operation 610 may be followed by operation 620, where the emergency communication may be initiated along with generation of an identifier associated with the user. The identifier may also be transmitted along with the emergency communication to the emergency service provider.

At operation 630, one or more wireless modules may begin transmitting a beacon signal that includes the identifier and their respective wireless communication capabilities such that emergency personnel in a vicinity can triangulate (for example, through line-triangulation) the location of the user's communication device accurately. Operation 630 may be followed by optional operation 640, where the beacon frequency may be changed to enhance the likelihood of detection and connection with emergency personnel. In other examples, a modulation rate of the beacon signal may be lowered or a power level of the beacon signal may be increased as well.

The operations included in process 600 are for illustration purposes. Location determination for emergency services in wireless networks based on beacon signals according to embodiments may be implemented by similar processes with fewer or additional steps, as well as in different order of operations using the principles described herein.

Some embodiments may be implemented in a computing device that includes a communication module, a memory device, and a processor, where the processor executes a method as described above or comparable ones in conjunction with instructions stored in the memory device. Other embodiments may be implemented as a computer readable memory device with instructions stored thereon for executing a method as described above or similar ones. Examples of memory devices as various implementations of hardware are discussed above.

The above specification, examples and data provide a complete description of the manufacture and use of the composition of the embodiments. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims and embodiments.

## Claims

1. A method executed at least in part in a computing device of a user capable of wireless communication employing two or more wireless communication technologies for communication with other users through communication modalities for enabling location determination for emergency service purposes based on beaconing, the method comprising:
detecting initiation of an emergency communication session in a modality among the communication modalities provided by a wireless device;
generating an identifier associated with a user of the wireless device; where the method comprises:
activating a beacon mode that includes transmission of at least two periodic beacon signals, each in a different one of the two or more wireless communication technologies, wherein the at least two periodic beacon signals include the identifier; and
enabling determination of the location of the wireless device through triangulation of the at least two beacon signals by continuing to transmit the beacon signals.

2. The method of claim 1, further comprising:
transmitting the identifier to an emergency service provider as part of the emergency communication session.

3. The method of claim 1, further comprising:
lowering a modulation rate of the beacon signals to enhance a range of detection for the beacon signal.

4. The method of claim 1, further comprising:
changing a frequency of the beacon signals to enhance a likelihood of detection for the beacon signals.

5. The method of claim 1, further comprising:
facilitating the emergency communication session and transmitting the beacon signals through one of: a wireless local area network communication, a cellular communication, and a near field communication.

6. A wireless computing device with wireless communication capability for enabling location determination for emergency service purposes based on beaconing, the computing device comprising:
a memory storing instructions;
two or more wireless communication modules employing different wireless communication technologies for communication over communication modalities; and
a processor coupled to the memory and the wireless communication modules, the processor for executing a communication application, wherein the communication application is configured to:
detect initiation of an emergency communication session in a modality among the modalities provided by the wireless device;
generate an identifier associated with a user of the wireless device;
transmit the identifier to an emergency service provider as part of the emergency communication session; where the communication application is characterised to: activate a beacon mode in at least two of the wireless communication modules causing the at least two communication modules to each transmit a periodic beacon signal in a different one of the two or more technologies, wherein each beacon signal includes the identifier and wireless communication capabilities of the respective wireless communication module; and
enable determination of the location of the wireless device through triangulation of the at least two beacon signals by transmitting the beacon signals during and following the emergency communication session.

7. The computing device of claim 6, wherein the communication application is further configured to:
lower a modulation rate of the beacon signals to enhance a range of detection for the beacon signal; and
use a period of the beacon signals which reduces a power consumption of the wireless device.

8. The computing device of claim 6 wherein the communication application is further configured to change a frequency of the beacon signals to enhance a likelihood of detection for the beacon signal.

9. A computer-readable memory device with instructions stored thereon for enabling location determination for emergency service purposes based on beaconing, the instructions implementing the method of any one of claims 1 to 5.

## Patentansprüche

1. Verfahren, das zumindest zum Teil in einer Datenverarbeitungsvorrichtung eines Benutzers ausgeführt wird, die zur drahtlosen Kommunikation fähig ist, wobei zwei oder mehr drahtlose Kommunikationstechnologien zur Kommunikation mit anderen Benutzern durch Kommunikationsmodalitäten zum Ermöglichen einer Lokationsbestimmung für Notdienstzwecke auf der Basis von Beaconing eingesetzt werden, wobei das Verfahren Folgendes umfasst:
Erkennen einer Initiierung einer Notkommunikationssitzung in einer Modalität von den Kommunikationsmodalitäten, die von einer drahtlosen Vorrichtung bereitgestellt werden;
Erzeugen einer Kennung, die mit einem Benutzer der drahtlosen Vorrichtung assoziiert ist; wobei das Verfahren Folgendes umfasst:
Aktivieren eines Beacon-Modus, der die Übertragung von mindestens zwei periodischen Beacon-Signalen beinhaltet, jeweils in einer unterschiedlichen der zwei oder mehr drahtlosen Kommunikationstechnologien, wobei die mindestens zwei periodischen Beacon-Signale die Kennung beinhalten; und
Ermöglichen einer Bestimmung der Lokation der drahtlosen Vorrichtung durch Triangulation der mindestens zwei Beacon-Signale durch Fortsetzen des Übertragens der Beacon-Signale.

2. Verfahren nach Anspruch 1, das weiterhin Folgendes umfasst:
Übertragen der Kennung an einen Notdienstanbieter als Teil der Notkommunikationssitzung.

3. Verfahren nach Anspruch 1, das weiterhin Folgendes umfasst:
Senken einer Modulationsrate der Beacon-Signale, um einen Erkennungsbereich für das Beacon-Signal zu erhöhen.

4. Verfahren nach Anspruch 1, das weiterhin Folgendes umfasst:
Ändern einer Frequenz der Beacon-Signale, um eine Erkennungswahrscheinlichkeit für die Beacon-Signale zu erhöhen.

5. Verfahren nach Anspruch 1, das weiterhin Folgendes umfasst:
Erleichtern der Notkommunikationssitzung und Übertragen der Beacon-Signale durch eine der folgenden: eine drahtlose Ortsnetzkommunikation, eine
Mobilfunkkommunikation und eine Nahfeldkommunikation.

6. Drahtlose Datenverarbeitungsvorrichtung mit drahtloser Kommunikationsfähigkeit zum Ermöglichen einer Lokationsbestimmung für Notdienstzwecke auf der Basis von Beaconing, wobei die Datenverarbeitungsvorrichtung Folgendes umfasst:
einen Speicher, der Befehle speichert;
zwei oder mehr drahtlose Kommunikationsmodule, die unterschiedliche drahtlose Kommunikationstechnologien zur Kommunikation über Kommunikationsmodalitäten einsetzen; und
einen Prozessor, der mit dem Speicher und den drahtlosen Kommunikationsmodulen gekoppelt ist, wobei der Prozessor zur Ausführung einer Kommunikationsanwendung ist, wobei die Kommunikationsanwendung zu Folgendem konfiguriert ist:
Erkennen einer Initiierung einer Notkommunikationssitzung in einer Modalität von den Kommunikationsmodalitäten, die von der drahtlosen Vorrichtung bereitgestellt werden;
Erzeugen einer Kennung, die mit einem Benutzer der drahtlosen Vorrichtung assoziiert ist;
Übertragen der Kennung an einen Notdienstanbieter als Teil der Notkommunikationssitzung; wobei die Kommunikationsanwendung zu Folgendem gekennzeichnet ist: Aktivieren eines Beacon-Modus in mindestens zwei der drahtlosen Kommunikationsmodule, was bewirkt, dass die mindestens zwei Kommunikationsmodule jeweils ein periodisches Beacon-Signal in einer unterschiedlichen der zwei oder mehr Technologien übertragen, wobei jedes Beacon-Signal die Kennung und drahtlose Kommunikationsfähigkeiten des jeweiligen drahtlosen Kommunikationsmoduls beinhaltet; und
Ermöglichen einer Bestimmung der Lokation der drahtlosen Vorrichtung durch Triangulation der mindestens zwei Beacon-Signale durch Übertragen der Beacon-Signale während und nach der Notkommunikationssitzung.

7. Datenverarbeitungsvorrichtung nach Anspruch 6, wobei die Kommunikationsanwendung weiterhin zu Folgendem konfiguriert ist:
Senken einer Modulationsrate der Beacon-Signale, um einen Erkennungsbereich für das Beacon-Signal zu erhöhen; und
Verwenden einer Periode der Beacon-Signale, die einen Energieverbrauch der drahtlosen Vorrichtung verringert.

8. Datenverarbeitungsvorrichtung nach Anspruch 6, wobei die Kommunikationsanwendung weiterhin dazu konfiguriert ist, eine Frequenz der Beacon-Signale zu ändern, um eine Erkennungswahrscheinlichkeit für das Beacon-Signal zu erhöhen.

9. Computerlesbare Speichervorrichtung mit darauf gespeicherten Befehlen zum Ermöglichen einer Lokationsbestimmung für Notdienstzwecke auf der Basis von Beaconing, wobei die Befehle das Verfahren nach einem der Ansprüche 1 bis 5 umsetzen.

## Revendications

1. Procédé exécuté au moins en partie dans un dispositif informatique d'un utilisateur capable d'une communication sans fil employant deux ou plusieurs technologies de communication sans fil pour une communication avec d'autres utilisateurs par l'intermédiaire de modalités de communication pour permettre la détermination de localisations pour les besoins d'un service d'urgence sur la base du balisage, le procédé comprenant les opérations consistant à :
détecter l'amorçage d'une session de communication d'urgence dans une modalité parmi les modalités de communication fournies par un dispositif sans fil ;
générer un identifiant associé à un utilisateur du dispositif sans fil ; où le procédé comprend les opérations consistant à :
activer un mode de balise qui inclut la transmission d'au moins deux signaux de balise périodiques, chacun dans une technologie différente parmi les deux ou plusieurs technologies de communication sans fil, cas dans lequel lesdits au moins deux signaux de balise périodiques incluent l'identifiant ; et
permettre la détermination de la localisation du dispositif sans fil par l'intermédiaire d'une triangulation desdits au moins deux signaux de balise en continuant à transmettre les signaux de balise.

2. Procédé selon la revendication 1, comprenant en outre l'opération consistant à :
transmettre l'identifiant à un fournisseur de services d'urgence en tant que partie de la session de communication d'urgence.

3. Procédé selon la revendication 1, comprenant en outre l'opération consistant à :
abaisser une cadence de modulation des signaux de balise pour améliorer une portée de détection pour le signal de balise.

4. Procédé selon la revendication 1, comprenant en outre l'opération consistant à :
changer une fréquence des signaux de balise afin d'améliorer une probabilité de détection pour les signaux de balise.

5. Procédé selon la revendication 1, comprenant en outre les opérations consistant à :
faciliter la session de communication d'urgence et transmettre les signaux de balise par l'intermédiaire d'une communication parmi : une communication de réseau local sans fil, une communication cellulaire, et une communication de champ proche.

6. Dispositif informatique sans fil avec une capacité de communication sans fil pour permettre la détermination de localisations pour les besoins d'un service d'urgence sur la base du balisage, le dispositif informatique comprenant :
une mémoire stockant des instructions ;
deux ou plusieurs modules de communication sans fil employant différentes technologies de communication sans fil pour une communication grâce à des modalités de communication ; et
un processeur couplé à la mémoire et aux modules de communication sans fil, le processeur étant destiné à exécuter une application de communication, cas dans lequel l'application de communication est configurée de façon à :
détecter l'amorçage d'une session de communication d'urgence dans une modalité parmi les modalités de communication fournies par le dispositif sans fil ;
générer un identifiant associé à un utilisateur du dispositif sans fil ;
transmettre l'identifiant à un fournisseur de services d'urgence en tant que partie de la session de communication d'urgence ; où l'application de communication est **caractérisée** pour :
activer un mode de balise dans au moins deux des modules de communication sans fil, ce qui oblige lesdits au moins deux modules de communication à transmettre, chacun, un signal de balise périodique dans une technologie différente parmi les deux ou plusieurs technologies, cas dans lequel chaque signal de balise inclut l'identifiant et les capacités de communication sans fil du module de communication sans fil respectif ; et
permettre la détermination de la localisation du dispositif sans fil par l'intermédiaire d'une triangulation desdits au moins deux signaux de balise en transmettant les signaux de balise au cours de, et à la suite de la session de communication d'urgence.

7. Dispositif informatique selon la revendication 6, l'application de communication étant configurée en outre pour :
abaisser une cadence de modulation des signaux de balise pour améliorer une portée de détection pour le signal de balise ; et
utiliser une période des signaux de balise qui réduit une consommation énergétique du dispositif sans fil.

8. Dispositif informatique selon la revendication 6, l'application de communication étant configurée en outre pour changer une fréquence des signaux de balise afin d'améliorer une probabilité de détection pour le signal de balise.

9. Dispositif à mémoire lisible par ordinateur avec des instructions qui sont stockées dessus pour permettre la détermination de localisations pour les besoins d'un service d'urgence sur la base du balisage, les instructions mettant en oeuvre le procédé selon l'une quelconque des revendications 1 à 5.
